(19)

Europäisches
Patentamt
European
Patent Office
Office européen
des brevets

(11) **EP 2 657 194 A1**

(12) **EUROPEAN PATENT APPLICATION**

(43) Date of publication:
**30.10.2013 Bulletin 2013/44**

(51) Int Cl.:
**C02F 3/12** (2006.01)     **C02F 3/06** (2006.01)

(21) Application number: **12165952.8**

(22) Date of filing: **27.04.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Kemira Oyj
00180 Helsinki (FI)**

(72) Inventors:
• **Houni, Juha
  FI-41440 Ruuhimäki (FI)**

• **Pirkonen, Pentti
  FI-40500 Jyväskylä (FI)**
• **Melin, Esa
  FI-03250 Ojakkala (FI)**
• **Halttunen, Sakari
  FI-33270 Tampere (FI)**
• **Ånäs, Anders
  FI-02180 Espoo (FI)**

(74) Representative: **Maskula, Silla Marjatta et al
Turun Patenttitoimisto Oy,
P.O. Box 99
20521 Turku (FI)**

(54) **Method for a membrane bioreactor**

(57)     The invention relates to a method for improving the membrane performance in a membrane bioreactor. The method comprises leading of at least one incoming stream into a bioreactor tank, separating a clean outflow by using a membrane, and adding to the at least one incoming stream and/or to the bioreactor tank an inorganic coagulant, which is an aluminium and/or iron compound, and an anionic or non-ionic polymer.

EP 2 657 194 A1

**Description**

The invention relates to a method for improving membrane performance in a membrane bioreactor and use of the method according to the preambles of the appended claims.

A membrane bioreactor, MBR, process combines membrane filtration technique with biological treatment of wastewater. The suspended solids and micro-organisms of the biological treatment are separated from the treated water by using suitable membranes, e.g. ultrafiltration or microfiltration membranes. The membranes may either be immersed in the biological reactor tank, i.e. integral with the biological reactor tank, or the membranes may be arranged outside the biological reactor to a separate process unit, whereby an intermediate pumping step may be required.

A problem with MBR processes is the membrane fouling, which reduces flux through the membrane. Reason for membrane fouling is the interaction of the membrane material with the activated sludge liquor comprising living or dead micro-organism, colloidal material, soluble compounds, etc. Common methods to prevent membrane fouling are, for example, air sparging of the membranes and regular backwashing. Chemical cleaning of the membranes is nonetheless required. All these steps increase process costs, energy consumption and membrane downtime, and alternative solutions for improving membrane performance are eagerly sought after.

WO 2008/033703 discloses a method for improving membrane bioreactor performance by adding cationic polymers having a high molecular weight to the activated sludge. However, use of cationic polymers increase the overall costs of the treatment process, especially when used at dosages, which guarantee the improved membrane performance.

An object of this invention is to minimise or even eliminate the disadvantages in the prior art.

An object is also to provide a method with which the membrane performance may be improved.

A further object of this invention is to provide a method, with which the chemical cost related to prevention of membrane fouling may be reduced.

These objects are attained with the invention having the characteristics presented below in the characterising parts of the independent claims.

Typical method according to the present invention for improving membrane performance in a membrane bioreactor, comprises

- leading at least one incoming stream into a bioreactor tank,
- separating a clean outflow by using a membrane, and
- adding to the at least one incoming stream and/or to the bioreactor tank
- an inorganic coagulant, which is an aluminium and/or iron compound, and
- an anionic or non-ionic polymer.

Now it has been surprisingly found out that by adding an inorganic coagulant and an anionic or non-ionic polymer to at least one incoming stream and/or to the bioreactor tank in a MBR process it is possible to reduce membrane fouling as well as prolong the time between subsequent membrane cleaning operations. Further, it has been observed that the amount of added polymer can be kept low, when it is used together with an inorganic coagulant. It is advantageous to keep the amount of anionic or non-ionic polymer low, because the chemical costs are significantly reduced.

The present invention thus relates to method for operating a membrane bioreactor, especially for improving membrane performance in a membrane bioreactor.

The inorganic coagulant and the anionic or non-ionic polymer may be added simultaneously or subsequent to each other. The coagulant and the polymer may be added simultaneously as two separate feed streams to an incoming influent  stream or to the reactor tank. It is also possible to add the inorganic coagulant and the anionic or non-ionic polymer to separate incoming influent streams, which are brought together at the latest in the bioreactor tank. It is also possible to add the inorganic coagulant and then the polymer, or vice versa. Preferably the inorganic coagulant is added first, and after the addition of the inorganic coagulant the polymer is added and brought into contact with the material coagulated with inorganic coagulant, whereby flocs are formed in efficient manner.

The membrane bioreactor may comprise one or several aerobic reactors, or it may comprise a combination of at least two of the following reactors: anaerobic, anoxic and aerobic reactors.

According to one embodiment of the invention the inorganic coagulant or the anionic or non-ionic polymer may be added to at least one incoming stream after a pre-sedimentation or pre-screening step. The inorganic coagulant and/or anionic or non-ionic polymer may be added to an incoming stream, which is an influent stream or a sludge return flow. Preferably, the inorganic coagulant and the anionic or non-ionic polymer may be added in any stage of the MBR process, provided that the addition occurs before the separation membrane and after the optional pre-sedimentation or pre-screening step. In this context pre-sedimentation or pre-screening step means process step where large solid waste is separated from the raw influent stream. Typical examples of large solid waste in the municipal waste water are cans, rags, sticks, plastic packages, etc.

The inorganic coagulant is an aluminium or iron compound, preferably an aluminium compound. The inorganic coagulant comprising iron may be selected from a group consisting ferric sulphate, polyferric sulphate, ferric chloride sulphate, ferric chloride, polyferric chloride, ferrous sulphate, ferrous chloride sulphate, ferrous chloride and any of their mixtures. The inorganic coagulant comprising aluminium may be selected from a group consisting of aluminium chloride, polyaluminium chloride, aluminium sulphate, polyaluminium sulphate, polyaluminium chlorosulphate, sodium aluminate, aluminium chlorohydrate and any of their mixtures. In one embodiment of the invention the inorganic coagulant may comprise any mixture of the above-mentioned aluminium and iron compounds.

The inorganic coagulant is typically added in amount of 5 - 200 ppm, preferably 5 - 150 ppm, more preferably 10 - 100 ppm, still more preferably 10 - 50 ppm, given as active substance. In case the inorganic coagulant comprises aluminium, it is typically added in amount of 5 - 100 ppm, preferably 5 - 50, more preferably 10 - 50 ppm, calculated as active aluminium. In case the inorganic coagulant comprises iron, it is typically added in amount of 10 - 200 ppm, preferably 10 - 150 ppm, more preferably 10 - 100 ppm, still more preferably 20 - 100 ppm, calculated as active iron.

According to one preferred embodiment of the invention the inorganic coagulant is a polyaluminium compound, such as polyaluminium chloride or polyaluminum sulphate. Polyaluminium chloride is an inorganic polymer having a general formula $Al_n(OH)_mCl_{(3n-m)}$. For a polyaluminium chloride the degree of neutralisation, i.e. the replacement of Cl ions with OH ions, may be expressed by using the unit basicity. The basicity of polyaluminium compound may be generally expressed by the following formula

$$\% \text{ Basicity} = 100 \times [OH]/3[Al]$$

The higher the basicity, the higher the degree of neutralisation.

According to one embodiment of the present invention polyaluminium chloride may be used as 20 - 40 weight-%, more typically as 30 - 40 weight-% aqueous solution. Thus the solution may have aluminium content of 4.5 - 11.8 % and its $Al_2O_3$ content is 8.5 - 22.3 %. pH of the polyaluminium chloride solution is typically 0.5 - 4.2 and its specific gravity (25 °C) is typically 1210 - 1370 $kg/m^3$. Polyaluminium chloride may have basicity in the range of 10 - 70 %, more preferably 10 - 50 %, measured by using standard method EN 1302.

In another embodiment of the invention the polyaluminium compound, which is used as an inorganic coagulant is polyaluminium sulphate. Polyaluminium sulphate may be used as solution or in particle form. The solid content in a polyaluminium sulphate solution may be around 50 %. The solution may have aluminium content around 4.0 - 4.5 % and its $Al_2O_3$ content is 7.5 - 9 %. pH of a solution (1 % solution at 25 °C) of polyaluminium sulphate may be around pH 4. Specific gravity (25 °C) of polyaluminium sulphate solution may typically be around 1200 - 1300 $kg/m^3$. The basicity of polyaluminium sulphate may be around 15 - 25 %.

In the context of this application the term "anionic polymer" means a polymer having an overall negative charge. An anionic polymer may comprise only anionic monomers or it may comprise anionic, cationic or non-ionic monomers, provided that the overall net charge remains anionic. Typically anionic polymer has > 2 %, preferably > 5 %, more preferably > 10 % of anionic monomers, calculated as mol-% of all monomers.

In the context of this application the term "non-ionic polymer" means a polymer comprising a small amount of anionic groups or a completely non-ionic polymer without any charged groups. In other words, a non-ionic polymer may comprise only non-ionic monomers or it may comprise anionic, cationic or non-ionic monomers, provided that the overall net charge remains non-cationic, i.e. non-ionic polymer is free of cationic overall charge. Typically non-ionic polymer has < 2 %, preferably < 1 % of anionic monomers, calculated as mol-% of all monomers. A completely non-ionic polymer is however preferred.

The anionic or non-ionic synthetic polymer can be either in acid or in salt form, and it can be linear, branched or slightly crosslinked.

According to one embodiment of the invention the anionic or non- ionic polymer is an anionic or non- ionic synthetic polymer, preferably an anionic synthetic polymer. Preferably the non- ionic or anionic synthetic polymer is non-ionic or anionic polyacrylamide, preferably anionic polyacrylamide. According to one preferred embodiment of the invention anionic polyacrylamide is a homopolymer or a copolymer comprising at least one anionic monomer, such as (meth) acrylic acid, maleic acid, crotonic acid, itaconic acid, vinylsulphonic acid, 2- acrylamide- 2- methylpropanesulfonic acid, styrene sulfonic acid, vinyl phosphonic acid or ethylene glycol methacrylate phosphate. Also non charged monomers may be included, as long as the net charge of the polymer is anionic and the polymer has an acrylamide/ methacrylamide backbone. For example, non- ionic polyacrylamide may be a copolymer of acrylamide and up to about 25 percent of other nonionic comonomers, for example n- substituted acrylamides and methacrylamides.

Preferably the anionic synthetic polymer is, however, a copolymer of acrylamide with one or more of the anionic comonomers described above. Also glyoxylated anionic acrylamide copolymers are suitable for use in the present invention. According to one embodiment the anionic synthetic polymer may be obtained by hydrolyzing polyacrylamide.

Anionic or non-ionic synthetic polymer, preferably polyacrylamide, has a standard viscosity of > 1 mPas, preferably > 4 mPas, more preferably > 6 mPas. In practice a high standard viscosity is preferred, i.e. the higher the standard viscosity of the polymer, the better. Standard viscosity is here understood as a Brookfiled viscosity of a 0.1 weight-% polymer solution in 1 M NaCl at 25 °C measured at 60 rpm using the UL-adapter.

According to one embodiment of the invention the anionic or non-ionic synthetic polymer is added in amount of 1 - 20 ppm, preferably 2 - 15 ppm, more preferably 3 - 10 ppm, calculated as active substance.

According to one embodiment of the invention the anionic or non-ionic polymer is a natural anionic or non-ionic polymer, preferably a natural anionic polymer. Natural anionic polymer may be, for example, carboxymethyl cellulose (CMC), carboxymethyl hydroxyethylcellulose, anionic starch derivative, anionic guar derivative, alginate, or anionic nanofibrillated cellulose. Preferably the anionic natural polymer is anionic nanofibrillated cellulose. Nanofibrillated cellulose is here understood refined cellulose where most of the fibrils have been fully liberated from the cellulose fibres. Nanofibrillated cellulose comprises isolated individual cellulose fibrils and/or fibril bundles. Nanofibrillated cellulose has typically high aspect ratio, which means that the fibril length may even exceed one micrometre while the number-average fibril diameter may be below 200 nm. In nanofibrillated cellulose the fibrils have a diameter of < 1 $\mu$m, more typically 5 nm - 1 $\mu$m, and/or the diameter of the fibril bundles < 5 $\mu$m. Anionic nanofibrillated cellulose may be completely water soluble, partially water soluble or water insoluble. Partially water soluble or water insoluble nanofibrillated anionic cellulose is preferred. The anionic modification may be carried out before, after or during the production of nanofibrillated cellulose and it may be based for example on carboxymethylation. Anionic modification may also be carried out by physical adsorption of anionic substances on cellulose surface.

According to one embodiment of the invention the anionic or non-ionic natural polymer is added in amount of 1 - 30 ppm, preferably 2 - 20 ppm, more preferably 3 - 15 ppm, calculated as active substance.

Anionic or non-ionic natural polymer, preferably nanofibrillated cellulose, has a solution viscosity > 100 mPas, preferably > 200 mPas, more preferably > 400 mPas. Solution viscosity is here understood as a Brookfiled viscosity of a 1 weight-% polymer solution in water at 25 °C measured using appropriate rotational speed/spindle pair.

According to one embodiment of the invention the inorganic coagulant is an aluminium or iron compound, or their mixture, and the polymer is anionic or non-ionic polymer, provided that if the polymer is non-ionic the inorganic coagulant is free of iron. According to one preferred embodiment of the invention the inorganic coagulant is an aluminium compound and the polymer is anionic or non-ionic polymer, preferably anionic polymer.

The method describer in this application is suitable for treating industrial or municipal waste water.

The invention is described in more detail below with reference to the enclosed schematic drawing, in which

Figure 1     shows an embodiment according to the present invention,
Figure 2     shows another embodiment according to the present invention, and
Figure 3     shows still another embodiment according to the present invention.

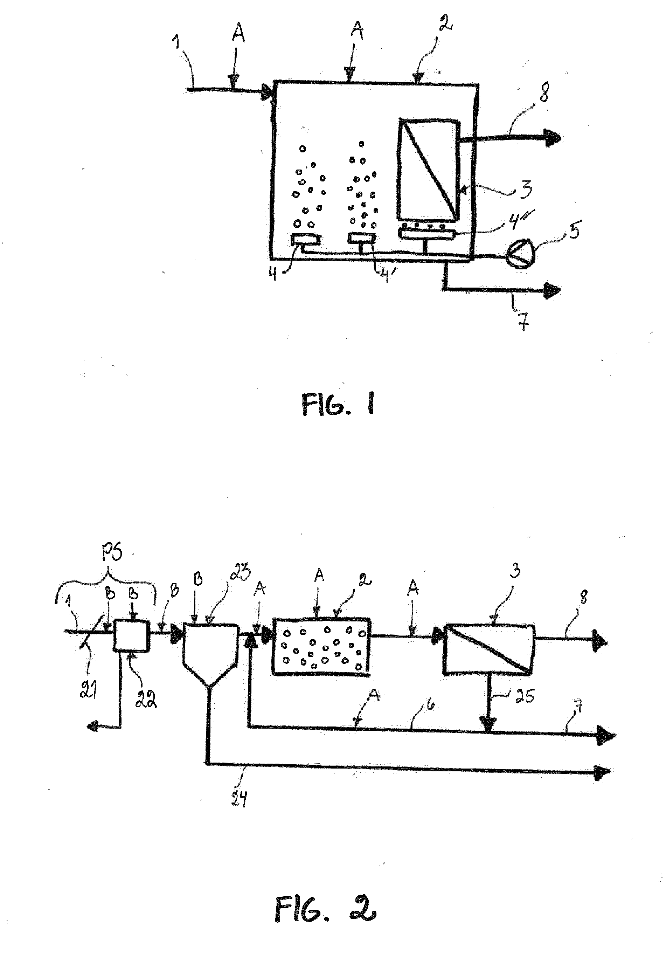

Figure 1 shows an embodiment according to the present invention. An incoming stream 1 is led to a bioreactor tank 2 comprising a membrane unit 3 immersed in the tank. Tank 2 comprises aerators 4, 4', 4" with which air is added by an air blower 5 to the tank 2. Sludge is removed from the tank 2 and removed from process by using pipeline 7. Treated effluent 8 is removed from the tank 2 after filtration by the membrane unit 3.

Possible addition points for the inorganic coagulant and for the anionic or non-ionic polymer are designated by A in Figure 1. In each of these addition points it is possible to add both the inorganic coagulant and the polymer, or it is possible to add either the inorganic coagulant or the polymer, provided that they both are added to the process.

Figure 2 shows another embodiment according to the present invention. An incoming stream 1 is first led through a pre-screening step PS, where the incoming stream is lead through a screen 21 and grit removal basin 22. In this way large pieces of solid waste is separated from the raw influent stream. After the pre-screening step PS the stream is led to a pre-sedimentation tank 23, and the separated sludge 24 is led further to sludge processing. The incoming stream to be treated is led further to an aerated bioreactor tank 2, where air is added by an air blower (not shown) to the tank 2. From the aerated bioreactor tank 2 the stream is led to a separate membrane unit 3, where the sludge 25 and the effluent 8 are separated from each other. Sludge 25 is removed from the membrane unit 3 and either returned back to the bioreactor tank 2 by using pipeline 6 or removed from the process by using pipeline 7. Treated effluent 8 is removed from the membrane unit 3.

Possible addition points for the inorganic coagulant and for the anionic or non-ionic polymer are designated with A, B in Figure 2. In each of these addition points it is possible to add both the inorganic coagulant and the polymer, or it is possible to add either the inorganic coagulant or the polymer, provided that they both are added to the process. Preferable addition points are designated with A, i.e. it is preferred that the inorganic coagulant and anionic or non-ionic polymer are added after pre-screening and pre-sedimentation steps.

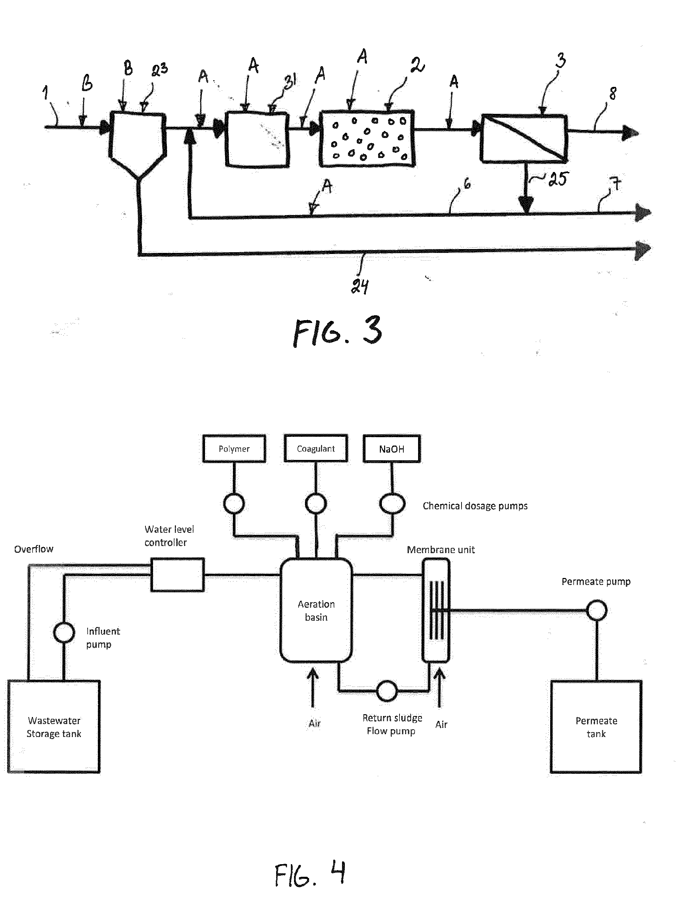

Figure 3 shows still another embodiment according to the present invention. An incoming stream 1 is first led a pre-sedimentation tank 23, and the separated sludge 24 is led further to sludge processing. From the pre-sedimentation tank 23 the stream to be treated is led further to an anoxic reactor 31. From the anoxic reactor 31 the stream is led to an aerated bioreactor tank 2, where air is added by an air blower (not shown) to the tank 2. From the aerated bioreactor tank 2 the stream is led to a separate membrane unit 3, where the sludge 25 and the effluent 8 are separated from each other. Sludge 25 is removed from the membrane unit 3 and either returned back to the bioreactor tank 2 by using pipeline 6 or removed from the process by using pipeline 7. Treated effluent 8 is removed from the membrane unit 3.

Possible addition points for the inorganic coagulant and for the anionic or non-ionic polymer are designated with A, B in Figure 3. In each of these addition points it is possible to add both the inorganic coagulant and the polymer, or it is possible to add either the inorganic coagulant or the polymer, provided that they both are added to the process. Preferable addition points are designated with A, i.e. it is preferred that the inorganic coagulant and anionic or non-ionic polymer are added after the pre-sedimentation step.

## EXAMPLE

One embodiment of the invention is explained in following non-limiting example.

Municipal waste water having following properties; suspended solids 165 $g/m^3$; Chemical Oxygen Demand, COD, 295 $g/m^3$; total phosphorus, P, 6.0 $g/m^3$; and ammonium nitrogen, NH4-N, 28.2 $g/m^3$; was treated with a small MBR unit comprising waste water storage tank, water level controller, aeration basin, membrane unit and permeate tank. Pumps were used for chemical dosing, influent, permeate and return sludge. Air was fed to aeration basin and membrane unit. The experimental set-up is schematically presented in Fig. 4.

Membrane unit comprised a Microdyn-Nadir BIO-CEL® LAB membrane module. Ultrafiltration membrane was Nadir®-UP150, which is made of permanently hydrophilic polyether-sulfone (PES) with a pore size of about 0.04 $\mu m$ (150 kDa). Membrane area was 0.34 $m^2$.

Permeate pump is operated according to membrane manufacturer's instructions by using a following cycle: 8.5 min permeation, 0.5 min relaxation, 0.5 min backwash, 0.5 min relaxation. Membranes were air scoured constantly. NaOH was dosed to the aeration basin in an appropriate manner and amount in order to maintain pH in the range ca. 7 - 8.

Experiment was made with continuous simultaneous chemical dosing of 150 ppm polyaluminium chloride, i.e. 13.8 mg Al/l, (trade name PAX-18, Kemira Oyj) and 5 ppm anionic polyacrylamide (trade name Superfloc A-120, Kemira Oyj). Polymer was fed as 0.1 % water solution. The Reference experiment was performed in the same manner as the Experiment but without the dosage of inorganic coagulant and anionic polymer.

The average operational conditions are presented in Table 1.

Table 1. Average operational conditions for the Experiment according to the invention (=Experiment) and for the Reference experiment (=Reference).

| Parameter | Reference | Experiment |
|---|---|---|
| Flow, l/h | 4.1 | 4.9 |
| Net flux, LMH* | 12 | 14 |
| pH | 7.22 | 7.26 |
| TMP**, bar | 0.014 | 0.016 |
| *LMH = litres/$m^2$/hour  **TMP = trans-membrane pressure (pressure loss) | | |

Treated wastewater characteristics are presented in Table 2.

Table 2. Characteristics of the treated wastewater, i.e. permeate.

| Permeate | Reference | Experiment |
|---|---|---|
| Turbidity, NTU | 0.16 | 0.14 |
| COD, $g/m^3$ | 25 | 19 |
| P, $g/m^3$ | 2.9 | 0.09 |
| $NH_4$-N, $g/m^3$ | 0.02 | 0.04 |

Permeability of the sludge was measured with the Millipore filter unit with a similar membrane as used in the process. Sludge samples were taken from the process after the process was stabilised. Millipore filter unit comprised a stirred filtration cell having a glass cylinder with stainless steel top and base plate. On the base plate, there was a place for membrane filter. Inside the glass cylinder, there was a magnetic stirring bar above the membrane. The filtration was carried out by pressurizing the test cell with compressed air and collecting permeate from the bottom of the test cell. A constant pressure of 0.4 bar was used for filtration.

Sludge characteristics are presented in Table 3.

The results show improved filterability, i.e. permeability, in the experimental unit receiving the chemicals. Shorter capillary suction time, CST, indicates better sludge dewatering characteristics. Transparent exopolymer particles, TEP, were also measured from the MBR sludge. These are produced by micro-organisms and suspected to contribute to the membrane fouling. The results show reduced amount of TEP in the dosed MBR compared to reference.

Table 3. Sludge characteristics.

| Sludge | Reference | Experiment |
|---|---|---|
| MLSS*, kg/m$^3$ | 8.5 | 11.3 |
| MLVSS**, % | 82 | 67 |
| Permeability, LMH***/bar | 175 | 303 |
| Viscosity, cP | 3.2 | 8.0 |
| CST, s | 17.5 | 10.4 |
| TEP, (XQ eqv) (g/m$^3$) | 27 | 7.3 |
| *MLSS = mixed liquor suspended solids<br>**MLVSS = Mixed liquor volatile suspended solids<br>***LMH = litres/m$^2$/hour | | |

Even if the invention is described with reference to what at present seems to be the most practical and preferred embodiments, it is appreciated that the invention shall not be limited to the embodiments described above, but the invention is intended to cover also different modifications and equivalent technical solutions within the scope of the enclosed claims.

**Claims**

1. Method for a membrane bioreactor, comprising

   - leading at least one incoming stream into a bioreactor tank,
   - separating a clean outflow by using a membrane,
   **characterised in** adding to the at least one incoming stream and/or to the bioreactor tank
   - an inorganic coagulant, which is an aluminium and/or iron compound, and
   - an anionic or non-ionic polymer.

2. Method according to claim 1, **characterised in** adding inorganic coagulant in amount of 5 - 200 ppm, preferably 5 - 150 ppm, more preferably 10 - 100 ppm, still more preferably 10 - 50 ppm, given as active substance, and/or adding anionic or non-ionic synthetic polymer in amount of 1 - 20 ppm, preferably 2 - 15 ppm, more preferably 3 - 10 ppm, calculated as active substance.

3. Method according to claim 1, **characterised in that** the inorganic coagulant is an aluminium compound.

4. Method according to claim 1, 2 or 3, **characterised in that** that the inorganic coagulant comprising aluminium is selected from a group consisting of aluminium chloride, polyaluminium chloride, aluminium sulphate, polyaluminium sulphate, polyaluminium chlorosulphate, sodium aluminate, aluminium chlorohydrate and any of their mixtures.

5. Method according to claim 3 or 4, **characterised in** adding the inorganic coagulant comprising aluminium in amount of 5 - 100 ppm, preferably 5 - 50, more preferably 10 - 50 ppm, calculated as active aluminium.

6. Method according to claim 1, **characterised in that** the inorganic coagulant comprising iron is selected from a group consisting ferric sulphate, polyferric sulphate, ferric chloride sulphate, ferric chloride, polyferric chloride, ferrous sulphate, ferrous chloride sulphate, ferrous chloride and any of their mixtures.

**7.** Method according to claim 1 or 5, **characterised in** adding the inorganic coagulant comprising iron in amount of 10 - 200 ppm, preferably 10 - 150 ppm, more preferably 10 - 100 ppm, still more preferably 20 - 100 ppm, calculated as active iron.

**8.** Method according to any of preceding claims 1 - 7, **characterised in that** the anionic or non-ionic polymer is an anionic or non-ionic synthetic polymer, preferably polyacrylamide.

**9.** Method according to claim 8, **characterised in that** the anionic or non-ionic synthetic polymer, preferably polyacrylamide, has a standard viscosity of > 1 mPas, preferably > 4 mPas, more preferably > 6 mPas.

**10.** Method according to any of preceding claims 1 - 7, **characterised in that** the anionic or non-ionic polymer is a natural anionic or non-ionic polymer.

**11.** Method according to claim 10, **characterised in that** the natural anionic polymer is carboxymethyl cellulose (CMC), carboxymethyl hydroxyethylcellulose, anionic starch derivative, anionic guar derivative, alginate, or anionic nanofibrillated cellulose, preferably anionic nanofibrillated cellulose.

**12.** Method according to any of preceding claims 1 - 11, **characterised in** adding the inorganic coagulant and the anionic or non-ionic polymer simultaneously or subsequent to each other.

**13.** Method according to claim 1, **characterised in that** the incoming stream is at least one influent stream and/or sludge return flow.

**14.** Method according to claim 1, **characterised in** adding the inorganic coagulant or the anionic or non-ionic polymer to at least one incoming stream after a pre-sedimentation or pre-screening step.

**15.** Use of method according to any of claims 1 - 14 for treating municipal or industrial wastewater.

FIG. 1

FIG. 2

FIG. 3

FIG. 4

Europäisches
Patentamt

European
Patent Office

Office européen
des brevets

## EUROPEAN SEARCH REPORT

Application Number

EP 12 16 5952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/041829 A1 (UNIV SYDNEY TECH [AU]; NGO HUU HAO [AU]; GUO WENSHAN [AU]) 14 April 2011 (2011-04-14) * page 6, line 8 - line 12 * * pages 1-76 * * page 15; example 2 * ----- | 1-15 | INV. C02F3/12 C02F3/06 |
| X | EP 2 017 228 A1 (TORAY INDUSTRIES [JP]) 21 January 2009 (2009-01-21) * page 9, paragraph 40 - paragraph 41 * * page 10, paragraph 45 * * figure 1 * ----- | 1-15 | |
| X | WO 2009/049401 A1 (SEPROTECH SYSTEMS INC [CA]; HAUSCHILD MARTIN [CA]) 23 April 2009 (2009-04-23) * page 43, paragraph 2 * * page 44, paragraph 5 * * abstract; figure 1 * ----- | 1-15 | |
| X | CN 101 962 248 A (SUZHOU INTER IND WATER TREAT ENGINEERING CO LTD) 2 February 2011 (2011-02-02) * examples 1-3 * * abstract * ----- | 1-15 | TECHNICAL FIELDS SEARCHED (IPC) C02F C01F |
| X | CN 101 633 541 A (ZHEJIANG STONE ENVIRONMENTAL E ZHEJIANG STONE ENVIRONMENTAL ENGINEERIN) 27 January 2010 (2010-01-27) * paragraph [0015] * ----- | 1-15 | |
| X | US 5 514 282 A (HIBBARD DAVID C [US] ET AL) 7 May 1996 (1996-05-07) * column 4, line 9 - line 14 * * figure 1 * * column 4, line 51 - column 6, line 30 * ----- -/-- | 1-15 | |

The present search report has been drawn up for all claims

| Place of search | Date of completion of the search | Examiner |
|---|---|---|
| Munich | 6 September 2012 | Shadid, Rania |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................
& : member of the same patent family, corresponding
document

EPO FORM 1503 03.82 (P04C01)

**EUROPEAN SEARCH REPORT**

Application Number

EP 12 16 5952

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/042704 A1 (FILTER CLEAR LTD [GB]; HOLMES NICOLAS [GB]; MARSHALL THOMAS [GB]) 14 April 2011 (2011-04-14) * page 20, line 7 - line 11 * ----- | 1-15 | |
| A | CN 101 746 928 A (SICHUAN METALLURG HUANNENG ENG) 23 June 2010 (2010-06-23) * abstract * ----- | 1-15 | |

TECHNICAL FIELDS SEARCHED (IPC)

The present search report has been drawn up for all claims

| Place of search | Date of completion of the search | Examiner |
|---|---|---|
| Munich | 6 September 2012 | Shadid, Rania |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 16 5952

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2012

| Patent document cited in search report | | | Publication date | Patent family member(s) | | | Publication date |
|---|---|---|---|---|---|---|---|
| WO 2011041829 | A1 | | 14-04-2011 | AU<br>CN<br>EP<br>US<br>WO | 2010305308 A1<br>102648162 A<br>2485984 A1<br>2012217201 A1<br>2011041829 A1 | | 03-05-2012<br>22-08-2012<br>15-08-2012<br>30-08-2012<br>14-04-2011 |
| EP 2017228 | A1 | | 21-01-2009 | AU<br>CN<br>EP<br>US<br>WO | 2007246525 A1<br>101437761 A<br>2017228 A1<br>2011226695 A1<br>2007129530 A1 | | 15-11-2007<br>20-05-2009<br>21-01-2009<br>22-09-2011<br>15-11-2007 |
| WO 2009049401 | A1 | | 23-04-2009 | CA<br>EP<br>US<br>WO | 2702683 A1<br>2215023 A1<br>2010282654 A1<br>2009049401 A1 | | 23-04-2009<br>11-08-2010<br>11-11-2010<br>23-04-2009 |
| CN 101962248 | A | | 02-02-2011 | NONE | | | |
| CN 101633541 | A | | 27-01-2010 | NONE | | | |
| US 5514282 | A | | 07-05-1996 | NONE | | | |
| WO 2011042704 | A1 | | 14-04-2011 | EP<br>WO | 2485981 A1<br>2011042704 A1 | | 15-08-2012<br>14-04-2011 |
| CN 101746928 | A | | 23-06-2010 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008033703 A